# EUROPEAN PATENT SPECIFICATION

(11) **EP 2 115 557 B1**
(45) Date of publication and mention of the grant of the patent: **26.01.2011**
(21) Application number: 07848779.0
(22) Date of filing: 11.12.2007
(51) Int. Cl.: G06F 3/041

(54) **SIGNAL PROCESSING METHOD FOR A TACTILE SENSOR**
SIGNALVERARBEITUNGSVERFAHREN FÜR EINEN BERÜHRUNGSSENSOR
PROCÉDÉ DE TRAITEMENT DE SIGNAL POUR CAPTEUR TACTILE

(30) Priority: 24.01.2007 HU 0700080
(43) Date of publication of application: 11.11.2009
(73) Proprietor: Pázmány Péter Katolikus Egyetem, 1088 Budapest (HU)
(72) Inventor: KIS, Attila, H-1121 Budapest (HU); SZOLGAY, Péter, H-2000 Szentendre (HU); VÁSÁRHELYI, Gábor, H-1024 Budapest (HU); KOVÁCS, Ferenc, H-1124 Budapest (HU)
(74) Representative: Kereszty, Marcell
(86) International application number: PCT/HU2007/000120
(87) International publication number: WO 2008/090391

(56) References cited:
- GB-A- 2 321 707
- US-A- 5 563 632

## Description

### TECHNICAL FIELD

The invention relates to a signal processing method designed for a tactile sensor, said tactile sensor comprising a tactile surface and elementary sensors arranged along the tactile surface and capable of three dimensional force sensing, wherein sensing is carried out by reading the signals of the elementary sensors.

### BACKGRQUND ART

There are many known methods in the prior art for processing read-out signals of elementary sensors during a tactile event sensing carried out by tactile sensors. Tactile sensors are most often used in robotics, but they may of course be applied in any other technical field, where tactile sensing is required. In the case of objects held by robot hands, various events may take place, because the objects may be subjected to many kinds of sudden forces. There is a demand for designing systems that allow an appropriately quick response to these impacts coming from outside.

There are known elementary sensors designed for three dimensional force sensing. For tactile sensors, such elementary sensors may be preferably used, which are arranged preferably along a tactile area defined by the tactile sensor. Such tactile sensors are disclosed e.g. in GB 2 321 707 A and US 5,563,632. Objects in contact with each other are in contact in most cases along an extensive surface, and therefore a large number of elementary sensors are required. The force distributions or in other words the pressure distribution maps or force maps determined by the signals of a large number of elementary sensors must be evaluated as quickly as possible, and the events must be recognised and classified possibly in real time.

It is a disadvantage of prior art methods that the slow processing of elementary sensor signals makes it difficult to take a rapid decision, and to apply intervention and control on the basis of the sensing provided by tactile sensors. Due to the fact that generally more than one elementary sensor is applied for one tactile sensor in order to achieve a higher sensing reliability, and the signals may be different subject to the local tactile events taking place on the tactile surface, the problems described above are aggravated in practice.

A further disadvantage of prior art solutions is that sliding and torsion events - considered to be extremely problematic from the aspect of sensing - cannot be handled properly by known signal processing methods.

### DESCRIPTION OF THE INVENTION

It is an object of the invention to provide a signal processing method for a tactile sensor, which is exempt from the disadvantages of prior art approaches. It is a further object to provide a method which enables faster sensing, and thereby faster intervention and control than known solutions. It is a further object to provide a signal processing method that enables the appropriate sensing of sliding and torsion events.

The method according to the invention is defined in the independent claim 1. Preferred embodiments and implementations of the invention are defined in the dependent claims.

### BRIEF DESCRIPTION OF DRAWINGS

The invention will hereinafter be described on the basis of preferred embodiments depicted by drawings, where
Fig. 1 is a schematic view of sensing forces along axis x,
Fig. 2 is a schematic view of sensing forces along axis y,
Fig. 3 is a schematic view of sensing forces along axis z,
Fig. 4 is a schematic view of sensing torsional forces around axis z,
Fig. 5 is a schematic view of sensing torsional forces around axis x,
Fig. 6 is a schematic view of sensing torsional forces around axis y,
Fig. 7. is a schematic drawing demonstrating major steps of the signal processing method,
Fig. 8 is a schematic drawing demonstrating the design that assists the appropriate sensing of torsional forces, and
Fig. 9 is the block diagram of a circuit designed for reading out the signals of elementary sensors.

### MODES FOR CARRYING OUST THE INVENTION

The method according to the invention recognises and classifies typical events taking place on the tactile surface by processing the three dimensional forces acting on the surface. Preferably, the algorithm senses twelve basic events and their combinations. The twelve events are on the one hand the positive and negative forces/displacements taking place along the three normal spatial axes x, y and z, and the positive and negative torques/swivels around the axes x, y and z.

According to the invention, for each elementary sensor, force components Tx, Ty and Sn measured along the three normal spatial axes x, y and z are determined, and a force map MTx, MTy and MSn is created from each of the force components along the same axis.

The force maps MTx, MTy and MSn are preferably generated in a way that a function of N values is assigned to the force components Tx, Ty and Sn, preferably the force maps are coded as a greyscale image. Each elementary sensor corresponds to one pixel in the greyscale images. For example, coding can be carried out in a way that one extreme value of the greyscale is assigned to the positive force component, the other extreme value of the greyscale is assigned to the negative force component, and the medium value of the greyscale is assigned to the force component of essentially 0 magnitude.

Consequently, the magnitude of the force component acting in a given point is shown by the intensity of the greyscale image. The normal rest status is shown in grey, the positive force is represented by a totally black colour and the negative force is in white. Hence, the three greyscale images so generated codes for each component the forces acting on the surface in a given moment of time.

According to the invention, the force maps MTx, MTy and MSn are evaluated and this can be implemented preferably by image recognition with a cellular neural network. After evaluating each force map separately, the results of the three evaluations are jointly evaluated. According to the invention, these evaluations preferably mean that the actually appearing value combination is determined out of predetermined value combinations.

The invention is suitable for both static and dynamic sensing. In the case of static sensing, the magnitude of force components is coded, while in the case of dynamic sensing their changes can be coded. In the latter case, the unchanged force component will be grey, the one changing in positive direction will be black and the one changing in negative direction will be white.

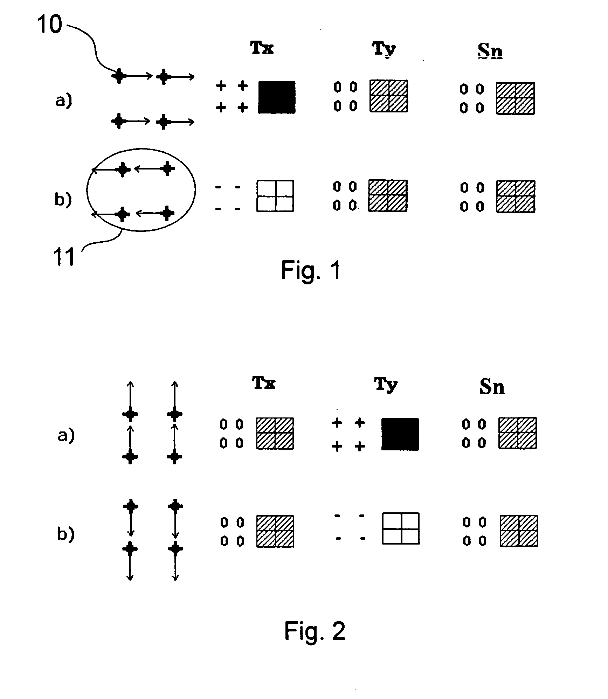

As shown in Fig. 1, sensor units 11 consisting of four elementary sensors 10 arranged in the corner points of a square are preferably used, one pair of sides of the square being parallel with one of the spatial axes x, y and z. This basic sensor unit 11 is able to detect the basic tactile events and their combinations as described above. In the case of extensive tactile surfaces, more than one such basic sensor unit 11 can be applied. For example, in the case of a system consisting of 32×32 sensor units 11, three 64x64 pixel greyscale images perform the coding of the three dimensional forces acting on the surface.

These images are preferably processed by a CNN-UM (Cellular Non-linear/Neural Network Universal Machine). In a way known *per se*, the CNN-UM based on nonlinear local interactions is excellent for detecting events in space and time. The characteristic patterns appearing in the images are recognised by individual, special templates. The event that has actually taken place can be concluded from the logical combination of recognised patterns.

Fig. 1 shows value combinations corresponding to a displacement or load in the direction of axis x. The 2×2 crosses shown on the left hand side stand for the 2×2 sensor units 11, i.e. one cross corresponds to one elementary sensor 10.

The 2×2 squares below the legends Tx Ty Sn stand for coded force components of forces arising on the surface of the 2×2 sensor unit. In case (a) shown at the top of the figure, under the impact of a lateral tensile force, component Tx of the resulting forces will grow in a positive direction, coded in black, while the vertical and normal components do not change and therefore they are coded in grey (hatched). Of course, a different coding principle may also be applied and a number of shades other than three may be used for coding. Case (b) shown at the bottom of the figure indicates a Tx component of negative direction.

Fig. 2 shows a coding combination in the case of positive (at the top) and negative (at the bottom) tensile forces in direction y. In this case the components of directions Tx and Sn will have a 0 value, and therefore they are coded in grey.

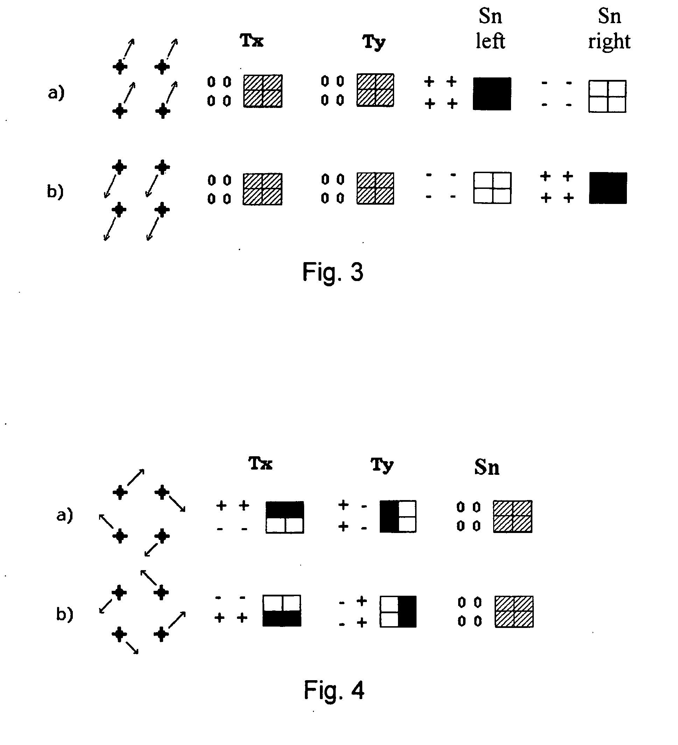

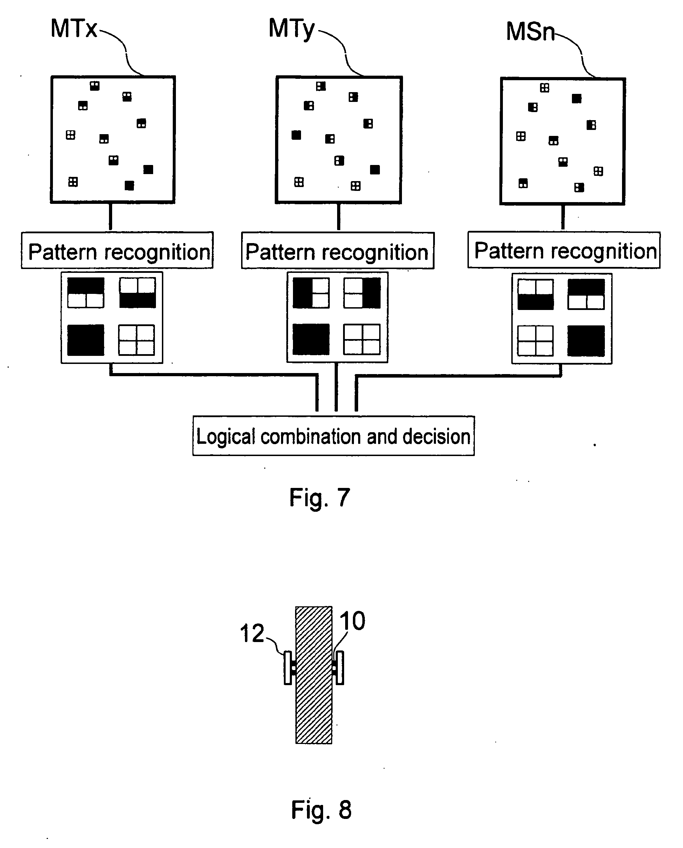

Fig. 3 shows a coding combination in the case of positive (at the top) and negative (at the bottom) pressure forces of direction z. In this case the components in directions Tx and Ty will have a 0 value and hence they are coded in grey. The figure relates to such an application shown as an example in Fig. 8, wherein the two tactile sensors 12 are used, which are arranged opposite each other and are suitable for gripping, the three force maps MTx, MTy and MSn are generated for both tactile sensors 12, and the evaluation results of each three force maps are evaluated together. In the case shown at the top of Fig. 3, the object to be held is pressed from the right to the left. In this case the left hand side elementary sensors are pressed by the object, while the right hand side tactile sensor is pulled (e.g. as a result of adhesion), and the opposite case is shown at the bottom.

In Fig. 4, swivel takes place around an axis which is in parallel with the axis z and cuts across the centre of the 2×2 sensor blocks. In this case the component Sn does not change, and the force components Tx and Ty appear according to the figure, showing the direction of torsion. In the top case (a), the torsion is clockwise, and in the bottom case (b), torsion in the opposite direction is shown.

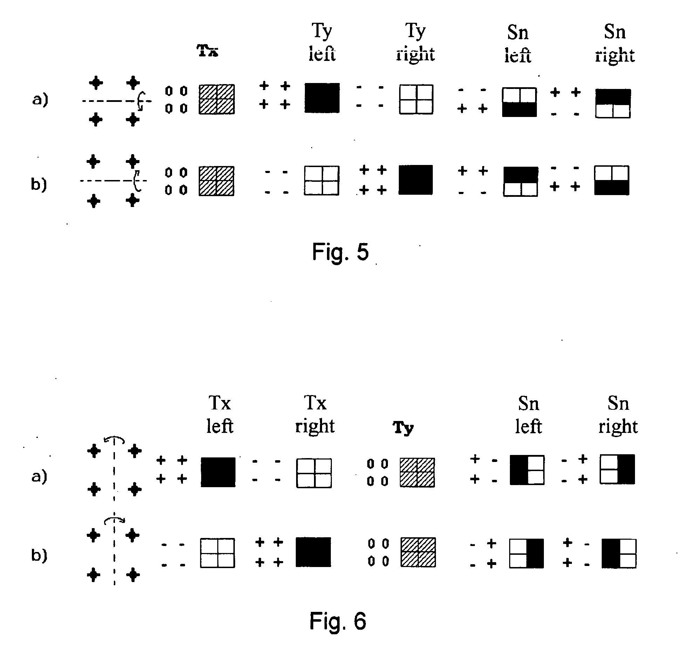

In the case depicted in Fig. 5, the swivel is (the torque acts) around the horizontal axis passing between the elementary sensors 10. The directions are determined as viewed from the holder (robot hand). The torsion may be clockwise (top case a)) or counterclockwise (bottom case b)).

In the case shown in Fig. 6, the swivel is (the torque acts) around the vertical axis passing between the elementary sensors 10. In a top view, the top case (a) corresponds to a clockwise direction and the bottom case (b) to an opposite swivel.

Fig. 7 shows a schematic drawing which explains the main steps of a signal processing method according to the invention and used as an example. According to the discussion above, the signals of the sensor units 11 distributed over the tactile surface are coded for each force component as force maps MTx, MTy and MSn, and the patterns are determined separately for each force map by image recognition. At this time is the appearing pattern determined out of the patterns in each Tx, Ty and Sn columns of Figs. 1 to 6. The pattern combinations, i.e. value combinations appearing at each sensor unit 11, correspond to tactile events according to the discussion above. Consequently, these events can be determined from the actual combination of the results of pattern recognition for each force map. On the basis of the event determined by the logical combination may a control/intervention decision be made, e.g. for a proper operation of a robot arm.

Fig. 8 shows a schematic drawing of a tactile sensor arrangement which enables efficient sensing of swivel/torsion events shown in Figs. 5 and 6. The essence of the approach is that the sides of the square defined by the elementary sensors 10 in the sensor unit 11 are shorter than the minimum thickness of the object to be gripped. This is because when this condition is met, as experiences show, a swivel around the axis leads to the emerging of substantial shear forces in a planar direction normal to the axis, which shear forces are depicted by the coding of force component Ty in Fig. 5, and Tx in Fig. 6. These shear forces greatly increase the safety of sensing and recognising the swivel/torsion events.

In an example tactile sensor, a piezo-resistive sensor block consisting of 8×8 elementary sensors and designed for three dimensional force sensing is applied. Si based tactile sensors are used as the components of the sensor block. Each elementary sensor consists of a bridge suspended at four points above an etched hole. Piezo-resistors are inserted at the four suspension points. Under the impact of forces acting on the bridge, the piezo-resistors are compressed or expanded, and hence their resistance changes. This design enables measuring the forces acting on the suspended surface. Each piezo-resistor is a varying member of a voltage divider bridge. By tracking the voltage in the central node of the voltage divider, the voltage generated in the four bridges can be measured. On the basis of the voltages measured, the three dimensional components of the force acting on the sensor surface can be calculated in a way known *per se*.

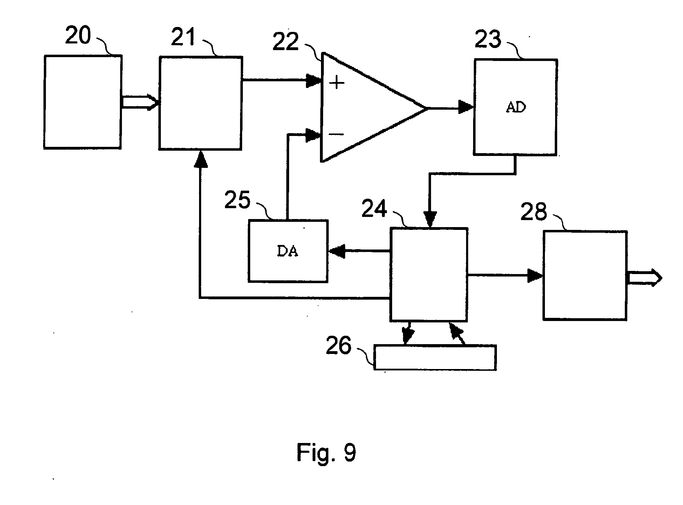

To make sure that the voltages of all bridges in the sensor block can be measured, 8×8×4 that is 256 voltage rates are to be processed in parallel. In order to reduce the number of parallel lines, a decoder circuit as shown in Fig. 9 is used. By applying the decoder circuit, thirty-two voltages existing at a time in one row only (eight elementary sensors) of the sensor block 20 is passed on to the reading circuit and then all the rows are measured one by one. The address inputs of the decoder circuit are controlled by a counter in the reading circuit.

The thirty-two voltage values so obtained are the input values of a multiplexer 21. The output of the multiplexer 21 is passed via an A/D converter 23 to a microcontroller 24. The addressing/control signals of the multiplexer 21 are also generated by the microcontroller 24.

The four piezo-resistors located in one elementary sensor of the sensor block behave as the varying branches of four semi-bridge circuits. For operating the sensor block, as an example, a supply voltage of 5 V is required. In an unloaded condition, the four output voltages of one elementary sensor will be around 2.5 V, because the 5 V is shared on a 50 % basis by the constant and varying branches of the semi-bridge circuits. However, the scatter of these voltages shows a deviation of some 100 mV in practice, and therefore it is required to calibrate the sensor block. When the sensor is subjected to a force, the value of measured voltages changes, but only in a magnitude of some 10 mV (in a range of approx. 0 to 50 mV). Because during the measurements it is exactly this few mV difference which is significant, an approach is chosen which only amplifies and digitises this change. After multiplexing, the voltages are supplied from the sensor block to a non-inverting input of a differential amplifier 22. A voltage measured in an unloaded condition on the given sensor and stored in the register 26 is supplied from the output of a D/A converter 25 to the inversion input of the differential amplifier. Hence, the differential amplified 22 only amplifies the difference vis-A-vis the rest position.

The measured values are passed on from the microcontroller 24 via an interface circuit 27 (e.g. RS 232) for processing.

By means of the invention it becomes possible to hold without slipping various fragile objects of unknown strength, for example a slippery thin-walled drinking glass. Such a task arises for example when a robot arm with two fingers holds a drinking glass, into which water is filled, consequently the weight changes constantly. In this case, when the weight of the object increases, the clamping force must be raised automatically and proportionally. In the case of a too low a clamping force, the slipping of the glass must be sensed by the system and on the basis of the tactile information it must increase the force exerted by the robot's fingers in order to stop the slipping.

The system using the method covered by the invention is able to automatically control this force. If the robot clamps with a constant force a drinking glass filled up half way, the force Sn normal to the tactile sensor surface does not change. The vertical component Ty of the lateral shear forces increases proportionally with the increasing weight of the glass, because the component is directly proportional with the weight of the drinking glass. The slipping does not occur as long as Ty is lower than the static adherence-frictional force between the glass and the robot's fingers. If the object starts to slip, the value of Ty immediately starts to decrease and then settles at a constant value which corresponds to the slipping-frictional force.

The increasing and then sudden decreasing of Ty as described above can be appropriately detected by the method according to the invention and hence it is excellent for solving a task considered to be problematic in robotics.

The invention is of course not limited to the preferred embodiments and implementations shown as examples in the figures, but further modifications are possible within the scope of the following claims.

## Claims

1. A signal processing method for a tactile sensor, said tactile sensor having a tactile surface and elementary sensors (10) being suitable for three dimensional force sensing and being arranged along the tactile surface, wherein sensing is carried out by reading signals of the elementary sensors (10), and wherein for each elementary sensor (10), force components (Tx, Ty, Sn) measured along three spatial axes (x, y, z) normal to each other are determined, three force maps (MTx, MTy, MSn) are generated from the respective force components (Tx, Ty, Sn) along the same axis, the three force maps (MTx, MTy, MSn) are evaluated, and then the results of the three evaluations are jointly evaluated **characterised in that** the generation of each of the force maps (MTx, MTy, MSn) is carried out in a way that the force components (Tx, Ty, Sn) along the same axis are coded in a greyscale image, and the evaluation of the force maps (MTx, MTy, MSn) is carried out by image recognition.

2. The method according to claim 1, **characterised In that** the generation of the force maps (MTx, MTy, MSn) is carried out in a way that a function of N greyscale shade values is assigned to the force components (Tx, Ty, Sn) and during the evaluations the actually appearing value combination is determined out of predetermined value combinations.

3. The method according to claim 2, **characterised in that** one extreme value of the greyscale is assigned to a positive force component (Tx, Ty, Sn), the other extreme value of the greyscale is assigned to a negative force component (Tx, Ty, Sn), while a medium value of the greyscale is assigned to a force component (Tx, Ty, Sn) of essentially 0 magnitude.

4. The method according to any of claims 1 to 3, **characterised in that** sensor units (11) consisting of four elementary sensors (10) arranged in the corner points of a square are used, and one pair of sides of the square is parallel with one of the spatial axes (x, y, z).

5. The method according to claim 4, **characterised in that** two tactile sensors (12) arranged opposite each other and suitable for gripping are applied, the three force maps (MTx, MTy, MSn) are generated for both tactile sensors (12), and the results of the evaluations of both three force maps are jointly evaluated.

6. The method according to claim 5, **characterised in that** the sides of the square are shorter than a minimum thickness of an object to be gripped.

7. The method according to any of claims 1 to 6, **characterised in that** the image recognition is carried out by a cellular neural network.

## Patentansprüche

1. Ein Signalverarbeitungsverfahren für einen Tastsensor, wobei der Tastsensor eine Tastoberfläche und elementare Sensoren (10) aufweist, geeignet für dreidimensionale Kraftabtastung und angeordnet entlang der Tastoberfläche,
wobei eine Abtastung ausgeführt wird durch das Lesen von Signalen der elementaren Sensoren (10), und
wobei für jeden elementaren Sensor (10), Kraftkomponenten (Tx, Ty Sn) gemessen entlang dreier senkrecht zueinander stehender Raumachsen (x, y, z) bestimmt werden, drei Kraftkennlinien (MTx, MTy MSn) aus den zugehörigen Kraftkomponenten (Tx, Ty, Sn) entlang der selben Achse erzeugt werden, die drei Kraftkennlinien (MTx, MTy, MSn) ausgewertet werden und dann die Ergebnisse der drei Auswertungen gemeinsam ausgewertet werden,
**dadurch gekennzeichnet, dass** die Erzeugung einer jeden Kraftkennlinie (MTx, MTy, MSn) in einer Art ausgeführt wird, dass die Kraftkomponenten (Tx, Ty, Sn) entlang der selben Achse in einem Graustufenbild codiert werden, und die Auswertung der Kraftkennlinien (MTx, MTy, MSn) durch Bilderkennung ausgeführt wird.

2. Verfahren nach Anspruch 1,
**dadurch gekennzeichnet, dass** die Erzeugung der Kraftkennlinien (MTx, MTy, MSn) in einer Art ausgeführt wird, dass eine Funktion von N Graustufentonwerten an die Kraftkomponenten (Tx, Ty, Sn) zugewiesen wird und während der Auswertungen die tatsächlich erscheinende Wertekombination aus vorbestimmten Wertekombinationen bestimmt wird.

3. Verfahren nach Anspruch 2,
**dadurch gekennzeichnet, dass** ein Extremwert der Graustufen einer positiven Kraftkomponente (Tx, Ty, Sn) zugewiesen wird, der andere Extremwert der Graustufen einer negativen Kraftkomponente (Tx, Ty, Sn) zugewiesen wird, während ein mittlerer Wert der Graustufen einer Kraftkomponente (Tx, Ty, Sn) von im Wesentlichen einer Höhe 0 zugewiesen wird.

4. Verfahren nach einem der Ansprüche 1 bis 3,
**dadurch gekennzeichnet, dass** Sensoreinheiten (11) bestehend aus vier in den Eckpunkten eines Quadrats angeordneten elementaren Sensoren (10) verwendet werden, und ein Paar von Seiten des Vierecks parallel ist zu einer der Raumachsen (x, y, z).

5. Verfahren nach Anspruch 4,
**dadurch gekennzeichnet, dass** zwei einander gegenüberliegend angeordnete und zum Einspannen geeignete Tastsensoren (12) angewendet werden, wobei die drei Kraftkennlinien (MTx, MTy, MSn) für beide Tastsensoren (12) erzeugt werden und die Ergebnisse der Auswertungen der beiden drei Kraftkennlinien gemeinsam ausgewertet werden.

6. Verfahren nach Anspruch 5,
**dadurch gekennzeichnet, dass** die Seiten des Quadrates kürzer sind als eine minimale Dicke eines zu fassenden Objektes.

7. Verfahren nach einem der Ansprüche 1 bis 6,
**dadurch gekennzeichnet, dass** die Bilderkennung von einem zellularen neuronalen Netzwerk ausgeführt wird.

## Revendications

1. Procédé de traitement de signal pour un capteur tactile, ledit capteur tactile possédant une surface tactile et des capteurs élémentaires (10) qui sont conçus pour la détection de forces tridimensionnelles et qui sont disposés le long de la surface tactile, dans lequel la détection s'effectue en lisant des signaux des capteurs élémentaires (10) et dans lequel, pour chaque capteur élémentaire (10), des composantes de force (Tx, Ty, Sn) mesurées sur trois axes de l'espace (x, y, z) normaux entre eux sont déterminées, des cartes de trois forces (MTx, Mty, MSn) sont produites à partir des composantes de force respectives (Tx, Ty, Sn) sur le même axe, les cartes de trois forces (MTx, Mty, MSn) sont évaluées, après quoi les résultats des trois évaluations sont évalués conjointement, **caractérisé en ce que** la production de chacune des cartes de forces (MTx, Mty, MSn) est effectuée en codant sous la forme d'une image à niveaux de gris les composantes de force (Tx, Ty, Sn) sur le même axe et en réalisant l'évaluation des cartes de force (MTx, Mty, MSn) par reconnaissance d'image.

2. Procédé selon la revendication 1, **caractérisé en ce que** la production des cartes de force (MTx, Mty, MSn) est effectuée en attribuant une fonction de N valeurs de niveaux de gris aux composantes de forces (Tx, Ty, Sn) et, pendant les évaluations, en déterminant la combinaison de valeurs qui apparaît réellement, parmi des combinaisons de valeurs prédéterminées.

3. Procédé selon la revendication 2, **caractérisé en ce qu'**une valeur extrême de l'échelle de niveaux de gris est attribuée à une composante de force (Tx, Ty, Sn) positive, l'autre valeur extrême de l'échelle de niveaux de gris est attribuée à une composante de force (Tx, Ty, Sn) négative tandis qu'une valeur moyenne de l'échelle de niveaux de gris est attribuée à une composante de force (Tx, Ty, Sn) d'amplitude essentiellement nulle.

4. Procédé selon l'une quelconque des revendications 1 à 3, **caractérisé en ce que** l'on utilise des unités de détection (11) composées de quatre capteurs élémentaires (10) implantés aux coins d'un carré et une paire de côtés du carré est parallèle à un des axes de l'espace (x, y, z).

5. Procédé selon la revendication 4, **caractérisé en ce que** l'on utilise deux capteurs tactiles (12) implantés opposés l'un à l'autre et conçus pour être saisis, les cartes des trois forces (MTx, Mty, MSn) sont produites pour les deux capteurs tactiles (12) et les résultats des évaluations sont évalués conjointement pour les deux cartes de trois forces.

6. Procédé selon la revendication 5, **caractérisé en ce que** les côtés du carré sont plus courts qu'une épaisseur minimale d'un objet à saisir.

7. Procédé selon l'une quelconque des revendications 1 à 6, **caractérisé en ce que** la reconnaissance d'image est effectuée par un réseau neuromimétique cellulaire.
